# EUROPÄISCHE PATENTSCHRIFT

(11) **EP 1 947 428 B1**
(45) Veröffentlichungstag und Bekanntmachung des Hinweises auf die Patenterteilung: **15.05.2013**
(21) Anmeldenummer: 08033503.7
(22) Anmeldetag: 11.01.2008
(51) Int. Cl.: G01F 15/18

(54) **Anschlussgehäuse und Verbrauchsgerät**
Connector housing and device
Boîtier de raccordement et appareil de consommation

(30) Priorität: 18.01.2007 DE 102007002685
(43) Veröffentlichungstag der Anmeldung: 23.07.2008
(73) Patentinhaber: Techem Energy Services GmbH, 65760 Eschborn (DE)
(72) Erfinder: Volz, Stefan, 63756 Alzenau (DE); Leblang, Lars, 60433 Frankfurt am Main (DE)
(74) Vertreter: KEIL & SCHAAFHAUSEN Patentanwälte

(56) Entgegenhaltungen:
- EP-A- 1 901 043
- DE-A1- 4 121 056
- DE-A1- 10 003 343
- DE-U- 1 991 825

## Beschreibung

Die Erfindung betrifft eine Vorrichtung mit einem Anschlussgehäuse für ein Verbrauchsmessgerät und mit einem Anschlussstutzen zum Einbau in eine rohrgebundene Installation und mit einer Öffnung für den Zu- und/oder Ablauf eines in der rohrgebundenen Installation fließenden Mediums gemäß dem Oberbegriff des Anspruchs 1. Außerdem bezieht sich die Erfindung auf ein Verbrauchsmessgerät mit einer Messanordnung und einer entsprechenden Vorrichtung mit Anschlussgehäuse.

Die Erfindung kann besonders bevorzugt bei dem Einbau von Wasserzählern oder Wasserzähler(anschluss)gehäusen in Neuinstallationen oder bei der Nachrüstung in bestehenden Rohrleitungen Anwendung finden. Dabei wird üblicherweise aus der Rohrleitung ein Stück herausgetrennt, um den Zähler einsetzen zu können. Dies geschieht in der Regel über sogenannte Verschraubungen, die den Zähleranschluss, d.h. die Öffnung für den Zu- bzw. Ablauf des Mediums in dem Zählergehäuse, und eine Rohrleitung kraftschlüssig miteinander verbinden. Zwischen dem Zähleranschluss und der Rohrleitung ist eine Dichtung eingefügt.

Die Verschraubung ist überwiegend leitungsseitig angebracht, so dass an dem Anschlussstutzen des Zähler(anschluss)gehäuses ein entsprechendes Gewinde vorgesehen ist. Die Verschraubung kann jedoch auch an dem Anschlussstutzen des Gehäuses angebracht sein und auf ein an der Rohrleitung vorgesehenes Gewinde aufgeschraubt werden. Es sind grundsätzlich auch andere, das Rohrsystem abdichtende Befestigungsmöglichkeiten denkbar. In der Praxis besteht dabei immer wieder das Problem, dass der Zähler bzw. dessen Anschlussgehäuse nicht exakt zwischen die Rohrleitungen passen, wobei zwischen dem Anschlussstutzen und der Rohrleitung - bezogen auf die Achse des Anschlussstutzens - ein radialer Versatz, ein axialer Versatz und/oder ein Winkelversatz vorliegen können. Bei dem radialen Versatz findet ein Sprung in der Achse zwischen dem Anschlussstutzen des Zähleranschlussgehäuses und der Achse der Rohrleitung statt. Ein axialer Versatz führt zu einem Spalt, wenn das aus der Rohrinstallation herausgeschnittene Rohrstück länger ist als das Zähleranschlussgehäuse mit dem oder den Anschlussstutzen, bzw. zu einer Überschneidung, wenn das aus der Rohrinstallation herausgeschnittene Rohrstück kürzer ist als das Zähleranschlussgehäuse. Dieses Problem kann auch bei Verwendung von zu dicken Dichtungen auftreten, die zwischen die Rohrinstallation und den Anschlussstutzen eingelegt werden. Ferner können die Achsen der Rohrleitung und des Anschlussstutzens einen Winkel einschließen (Winkelversatz).

Bei allen vorbeschriebenen Ungenauigkeiten in der Ausrichtung müssen die Rohrleitung und der Zähler bzw. das Zähler(anschluss)gehäuse mit teilweise sehr hohem Kraftaufwand zueinander ausgerichtet werden. Dies kann zu hohen Bauteilspannungen in der Verschraubung, der Rohrleitung und/oder dem Zählergehäuse führen. Bei Anschlussgehäusen aus Kunststoff können solche Spannungen zu Beschädigungen führen. Bei einem dauerhaften Auftreten dieser Spannungen kann es durch ein Fließen des Kunststoffs auch zu Verformungen des Gehäuses kommen, die Undichtigkeiten hervorrufen können.

Um einen zuverlässigen Einsatz von Zählergehäusen aus Kunststoff zu ermöglichen oder das Auftreten hoher Spannungen in der Rohrinstallation zu vermeiden, ist es bekannt, Ausgleichsarmaturen in die Wasserleitungen einzusetzen, mit denen die vorerwähnten Ungenauigkeiten der Ausrichtung zwischen der Rohrinstallation und dem Verbrauchsmessgerät ausgeglichen werden können. Dies ist jedoch aufwändig, weil zusätzliche Teile in das Rohrsystem eingebaut werden müssen.

Um einen Wasserzähler ohne Verwendung einer solchen zusätzlichen Ausgleichsarmatur in Wasserleitungen einsetzen zu können, wird in der EP 1 102 042 A2 ein Wasserzählergehäuse mit einer Stutzenöffnung beschrieben, welche einen innenliegenden Dichtbereich besitzt. In diese Stutzenöffnung wird ein Anschlussstutzen eingeschoben und mittels eines O-Rings gegen den Dichtbereich in der Stutzenöffnung flüssigkeitsdicht abgedichtet. Der Anschlussstutzen ist axial, radial und/oder durch Kippen beweglich.

In diesem System können also die Probleme eines Längen- bzw. Versatzausgleichs gelöst und hohe Bauteilspannungen durch die Montagekräfte vermieden werden. Es ist auch möglich, Zähler oder Anschlussstücke aus Kunststoff in metallische Rohrleitungen einzusetzen, die unterschiedliche thermische Ausdehnungskoeffizienten aufweisen, da auftretende Spannungen zwischen dem Zählergehäuse und dem Anschlussstutzen durch ein Verschieben des Anschlussstutzens in der Stutzenöffnung ausgeglichen werden können. Auch können so durch hohe Montagekräfte beim Ausrichten in Messingbauteilen gehäuft auftretende Spannungsrisskorrosionen vermieden werden.

Ein derartiger Wasserzähler bedeutet bei der Fertigung jedoch einen hohen Aufwand, da die Stutzenöffnung mit dem Dichtbereich und der Anschlussstutzen sehr genau aufeinander abgestimmt werden müssen. Durch Verkalkung oder sonstige Beschmutzung auf den Dichtflächen besteht zudem die Gefahr von Undichtigkeiten, vor allem bei thermischen Lastwechseln, die zu einem Verschieben des zur Dichtung verwendeten O-Rings führen können. Außerdem ist dieser O-Ring nicht gleichmäßig verpresst, da der Exzenter nur schwer einzustellen ist. Auch dies führt zu einer erhöhten Leckagegefahr.

Aus der DE 10 2005 006 708 A1 ist ferner ein Gehäuse für Wasserverbrauchszähler mit einem Zulaufstutzen und einem Ablaufstutzen sowie einer zulaufseitigen Verbindungsarmatur und einer ablaufseitigen Verbindungsarmatur bekannt. Die Stutzen und die Verbindungsarmaturen sind jeweils als glatte Zylinder und damit kooperierende Zylinderöffnungen ausgebildet und bilden lösbare Steckverbindungen, die durch O-Ringe abgedichtet werden. Auch bei dieser Lösung können die vorbeschriebenden Dichtigkeitsprobleme auftreten. Außerdem ist der Einbau aufgrund der Vielzahl der vorgesehenen Einzelteile aufwändig.

Die nachveröffentlichte EP 1 901 043 A2 beschreibt ein Zählergehäuse zum Einsetzen in eine Rohrleitung mit einem Gehäusekörper und zwei mit einer Rohrleitung in Verbindung zu verbringenden Anschlussstutzen, wobei wenigstens ein Anschlussstutzen über einen elastischen Verbindungsabschnitt mit dem Gehäusekörper verbunden ist. Der Verbindungsabschnitt ist ein Polymerabschnitt aus Silikonkautschuk, der in einem beliebigen Spritz- oder Gießverfahren an dem Gehäusekörper und dem Anschlussstutzen festgelegt wird und beim Abkühlen vernetzt und aushärtet, jedoch im ausgehärteten Zustand hinreichend elastisch ist.

Aus der DE 100 03 343 A1 ist ein Wasserzähler mit zwei Stutzenöffnungen bekannt, die einen innenliegenden Dichtbereich aufweisen. In die Stutzenöffnungen wird ein Anschlussstutzen eingeschoben. Ein O-Ring dichtet den Anschlussstutzen gegen den Dichtbereich flüssigkeitsdicht ab, wobei der Anschlussstutzen axial, radial und/oder durch Kippen beweglich bleibt.

Die DE 1 991 825 U beschreibt eine elastische Verbindungsmuffe aus Kautschuk für Rohrleitungen, die beim Formen an den Ansatzstücken der Rohrleitung anhaftet oder mit diesen verklebt wird, wobei zur verbesserten Haftung zahnförmige Rillen bzw. Nuten vorgesehen sind.

Aufgabe der Erfindung ist es daher, für Verbrauchszähler und deren Anschlussgehäuse einen universell einsetzbaren Längen-, Winkel- und Versatzausgleich vorzuschlagen, der einfach montierbar ist und in allen Einbausituationen eine hohe Dichtheit gewährleistet.

Diese Aufgabe wird mit den Merkmalen der Ansprüche 1 und 7 gelöst.

Bei der Vorrichtung der eingangs genannten Art ist dazu insbesondere vorgesehen, dass zwischen dem Anschlussstutzen und dem Anschlussgehäuse ein, bezogen auf die Achse des Anschlussstutzens, in radialer und/oder axialer Richtung elastisches Zwischenstück angeordnet ist. Dabei ist der Anschlussstutzen durch das Zwischenstück an dem Anschlussgehäuse festgelegt, so dass das Anschlussgehäuse, das Zwischenstück und der Anschlussstutzen einteilig miteinander verbunden sind und die Vorrichtung bilden, welche nachfolgend verkürzend auch als Anschlussgehäuse bezeichnet wird. Insbesondere soll das Zwischenstück nicht zerstörungsfrei von dem Anschlussstutzen und dem Anschlussgehäuse lösbar festgelegt sein. Dadurch ist bei der Montage der Vorrichtung an jedem Anschlussstutzen lediglich eine (unvermeidbare) Verbindung herzustellen und eine Dichtfläche abzudichten. Dies vereinfacht die Montage im Gegensatz zu den vorbeschriebenen Lösungen im Stand der Technik erheblich, bei denen an mehreren Stellen Undichtigkeiten während der Montage und dem Betrieb auftreten können. Zudem werden durch das erfindungsgemäß vorgesehene elastische Zwischenstück der Anschlussstutzen und das Anschlussgehäuse bzw. das in dem Anschlussgehäuse befindliche Verbrauchsmessgerät mechanisch entkoppelt, so dass ein radialer, axialer und/oder Winkelversatz zwischen dem Anschlussgehäuse und der rohrgebundenen Installation im Rahmen üblicher Toleranzen beim Einbau automatisch ausgeglichen werden. Bei den Anschlussstutzen kann es sich üblicherweise um Gewindestutzen mit einem genormten Gewinde handeln, das mit Verschraubungen in der rohrgebundenen Installation zusammenwirkt. Eine gute Dichtwirkung wird erreicht, weil das Zwischenstück auf dem Anschlussstutzen und dem Anschlussgehäuse bzw. dem Anschlussrohr aufvulkanisiert ist und durch das Vulkanisieren eine zuverlässig dichte und dauerhafte Verbindung des vorzugsweise aus EPDM bestehenden Zwischenstücks mit metallischen oder Kunststoff-Werkstoffen des Zählergehäuses bzw. Anschlussgehäuses hergestellt werden kann. Mit einem einfach anwendbaren Verfahren wird also eine stoffschlüssige, dauerhafte Verbindung erreicht, die zum einen hochfest ist und zum anderen auch die erforderliche Dichtfunktion zuverlässig erfüllt.

Das Zwischenstück ist aus einem mediumsbeständigen Gummi, insbesondere einem Ethylen-Propylen-Dien-Kautschuk (abgekürzt: EPDM), aufgebaut. Ein derartiges Zwischenstück aus Gummi ist besonders haltbar und kann als elastisches Zwischenstück die mechanische Verbindung zwischen dem Anschluss- bzw. Gewindestutzen und dem eigentlichen Gehäusebauteil dauerhaft herstellen. Aufgrund der elastischen Eigenschaften des Zwischenstücks kann ein durch ungenaue Ausrichtung ggf. auftretender Versatz zwischen dem Anschlussgehäuse und der rohrgebundenen Installation durch eine Verformung des Zwischenstücks ausgeglichen werden.

Ferner ist das Zwischenstück abdichtend zwischen dem Anschlussstutzen und dem Anschlussgehäuse festgelegt. Das Zwischenstück verbindet also den Durchlass zu dem Anschlussstutzen abdichtend mit der Öffnung in dem Anschlussgehäuse, so dass ein durch das Installationssystem fließendes Medium durch den Anschlussstutzen und das Zwischenstück zu der Öffnung des Anschlussgehäuses hin oder aus dieser hinausströmen kann. Es ist möglich, das Zwischenstück unmittelbar um die Öffnung an dem Anschlussgehäuse festzulegen. Vorteilhafterweise geht jedoch von der Öffnung in dem Anschlussgehäuse ein zu dem Anschlussgehäuse gehörendes Anschlussrohr aus, an dem das Zwischenstück einfach abdichtend befestigt werden kann.

Um eine zuverlässig abdichtende Verbindung herzustellen, kann das Zwischenstück erfindungsgemäß Verbindungsflächen zur Anlage an dem Anschlussstutzen und dem Anschlussgehäuse (bzw. dem Anschlussrohr) aufweisen. Besonders bevorzugt sind radiale und/oder axiale Verbindungsflächen. Eine radiale Verbindungsfläche ist dabei definiert als eine Verbindungsfläche, deren Flächennormale senkrecht zu der Achse des Anschlussstutzens verläuft. Eine axiale Verbindungsfläche ist definiert als eine Verbindungsfläche, deren Flächennormale in Richtung der Achse des Anschlussstutzens verläuft. Demgemäß eignen sich radiale Verbindungsflächen insbesondere zum unmittelbaren Anschluss des Zwischenstücks an Rohre, indem die Verbindungsflächen auf die äußere oder innere Rohrwandung aufgelegt werden. Axiale Verbindungsflächen werden insbesondere gut an Flansche oder das Anschlussgehäuse selbst angebracht. Die Erfindung ist jedoch nicht auf das Vorsehen radialer und/oder axialer Verbindungsflächen beschränkt. Vielmehr ist es auch möglich, bezogen auf die Achse des Anschlussstutzens schräge Verbindungsflächen vorzusehen.

Damit das Zwischenstück durch einen möglichen Versatz zwischen der Rohrinstallation und dem Anschlussgehäuse auftretende Spannungen besonders gut aufnehmen kann, ohne dass große Kräfte zwischen dem Zwischenstück und dem Anschlussgehäuse bzw. dem Anschlussstutzen auf die Dichtflächen wirken, kann der die Verbindungsflächen miteinander verbindende Wandabschnitt des Zwischenstücks winkelig an den Verbindungsflächen angreifen, vorzugsweise in deren Normalenrichtung.

Eine besonders gute, elastische Verformung mit geringem Kraftangriff an den Verbindungs- bzw. Befestigungs- und Dichtflächen lässt sich bei einem insbesondere in Normalenrichtung angreifenden Wandabschnitt dann erreichen, wenn der die Verbindungsflächen miteinander verbindende Wandabschnitt des Zwischenstücks gewölbt ausgebildet ist. Insbesondere bei zwei radialen Verbindungsflächen zur Anlage an dem Anschlussstutzen und an dem Anschlussgehäuse (Anschlussrohr) kann der Wandabschnitt eine halbrohrförmige Wölbung aufweisen, welche von der Achse des Anschlussstutzens weg oder zu dieser hin gewölbt ist.

Typischerweise sind zwei Anschlussstutzen an dem Anschlussgehäuse eines Verbrauchsgerätes vorgesehen, wobei ein oder beide Anschlussstutzen ein Zwischenstück aufweisen können. Bspw. bei einem Wasserzähler befinden sich diese Anschlussstutzen normalerweise koaxial auf einander gegenüberliegenden Seiten des Anschlussgehäuses, weil auf diese Weise gute, hindernisarme Strömungsbedingungen in dem Anschlussgehäuse herrschen. In diesem Fall ist in der Regel ein Zwischenstück ausreichend. Bei nicht koaxial angeordneten Anschlussstutzen oder mehr als zwei Anschlussstutzen kann es sinnvoll sein, mehrere oder alle Anschlussstutzen erfindungsgemäß mit den vorbeschriebenen, elastischen Zwischenstücken auszustatten.

Ferner kann das Anschlussgehäuse eine Befestigungsmöglichkeit für ein Verbrauchsmessgerät aufweisen, bspw. eine mit einem Gewinde versehene Öffnung, in welche das Verbrauchsmessgerät, insbesondere ein Wasserzähler, einschraubbar ist. Der Wasserzähler selbst kann dabei bspw. in Form einer Messkapsel ausgebildet sein.

Entsprechend bezieht sich die vorliegende Erfindung auch auf ein Verbrauchsmessgerät mit einer Messanordnung und einem vorzugsweise mit dem Verbrauchsmessgerät fest verbundenen Anschlussgehäuse, welches wie vorbeschrieben ausgebildet ist und zwischen einem Anschlussstutzen zum Verbinden mit einer rohrgebundenen Installation und dem Anschlussgehäuse ein in radialer und/oder axialer Richtung elastisches Zwischenstück aufweist. Besonders vorteilhaft lässt sich die Erfindung bei einem als Wasserzähler oder Wärmezähler ausgebildeten Verbrauchsmessgerät einsetzen.

Weitere Merkmale, Vorteile und Anwendungsmöglichkeiten der Erfindung ergeben sich auch aus der nachfolgenden Beschreibung eines Anwendungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: ein erfindungsgemäßes Anschlussgehäuse für einen Wasserzähler in der Seitenansicht;
- Fig. 2: das Anschlussgehäuse gemäß Fig. 1 in einer Schnittdarstellung;
- Fig. 3a-c: schematisch mögliche Versatzarten bei dem Einbau von Anschlussgehäusen bzw. Verbrauchsmessgeräten in rohrgebundene Installationen;
- Fig. 4: einen Schnitt durch ein erfindungsgemäßes Zwischenstück gemäß einer zweiten Ausführungsform;
- Fig. 5: einen Schnitt durch ein erfindungsgemäßes Zwischenstück gemäß einer dritten Ausführungsform;
- Fig. 6: einen Schnitt durch ein erfindungsgemäßes Zwischenstück gemäß einer vierten Ausführungsform und
- Fig. 7: einen Schnitt durch ein erfindungsgemäßes Zwischenstück gemäß einer fünften Ausführungsform.

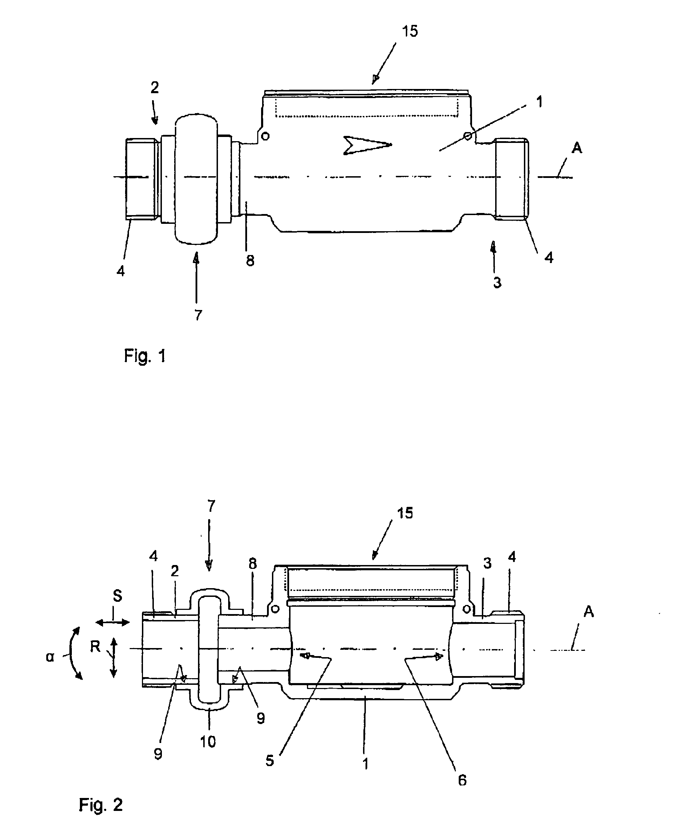

In Fig. 1 ist in der Seitenansicht ein Anschlussgehäuse 1 für einen Wasserzähler dargestellt, welches einen ersten Anschlussstutzen 2 und einen zweiten Anschlussstutzen 3 zum Einbau in eine rohrgebundene Installation darstellt. Die Anschlussstutzen 2, 3 sind jeweils als Gewindestutzen mit einem an ihrem freiliegenden Ende ausgebildeten Außengewinde 4 vorgesehen, welches in eine nicht dargestellte Verschraubung der rohrgebundenen Installation eingeschraubt werden kann. Der erste Anschlussstutzen 2 führt zu einer Öffnung 5 für den Zulauf eines in der rohrgebundenen Installation fließenden Mediums in das Anschlussgehäuse 1 und der zweite Anschlussstutzen 3 führt von einer Öffnung 6 für den Ablauf des Mediums aus dem Anschlussgehäuse weg.

Wie bei Wasserzählern üblich, sind die beiden Anschlussstutzen 2, 3 koaxial auf einander gegenüberliegenden Seiten des Anschlussgehäuses 1 angeordnet, d.h. sie liegen auf der selben Achse A der Anschlussstutzen 2, 3. Zwischen den Anschlussstutzen 2, 3 weist das Anschlussgehäuse 1 eine mit einem Gewinde versehene Öffnung 15 zum Einschrauben einer Wasserzählerkapsel auf. Die Erfindung ist jedoch nicht auf diesen speziellen Fall der Anordnung beschränkt, sondern bezieht sich allgemein auf einen Anschluss eines Anschlussgehäuses an eine rohrgebundene Installation mit einem oder mehreren Anschlussstutzen.

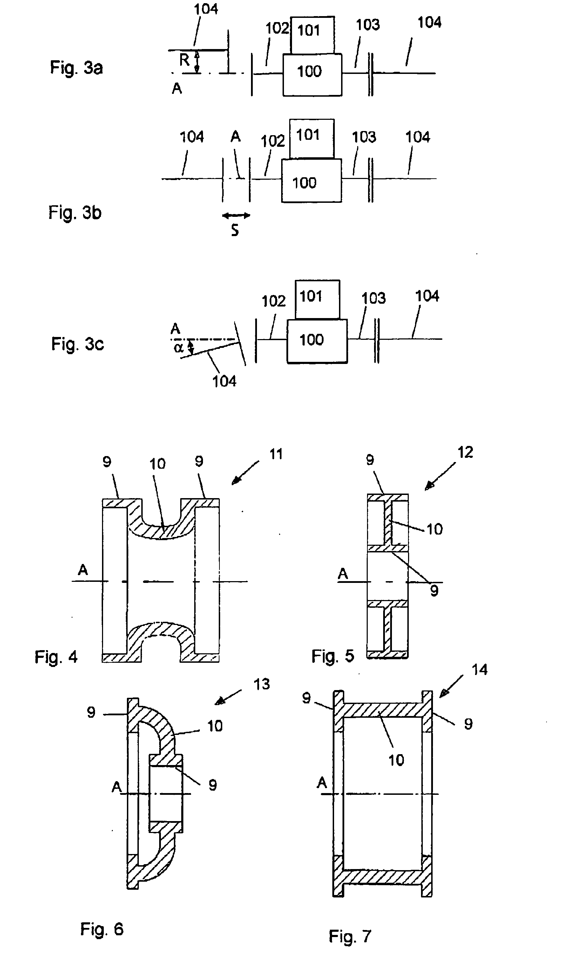

Um das in Fig. 1 dargestellte Anschlussgehäuse 1 in eine rohrgebundene Installation einzubringen, muss das Rohrsystem in einem geraden Rohrabschnitt aufgetrennt und ein der Länge des Anschlussgehäuses 1, zu denen auch die Anschlussstutzen 2, 3 gehören, entsprechenden Rohrstück herausgeschnitten werden. Dann können die Anschlussstutzen 2, 3 in geeigneter Weise an dem Rohrsystem festgelegt und abgedichtet werden. In der Praxis kann bei dem Einbau zwischen dem Anschlussgehäuse 1 und dem Rohrsystem in verschiedene Richtungen ein Versatz auftreten wie in den Fig. 3a bis 3c schematisch erläutert.

Fig. 3a zeigt ein Anschlussgehäuse 100 mit einem Wasserzähler 101 und zwei Anschlussstutzen 102 und 103. Der Anschlussstutzen 103 ist an dem Rohrsystem 104 festgelegt. Im Bereich des Anschlussstutzens 102 findet sich jedoch ein radialer Versatz R zwischen der Achse A des Anschlussstutzens 102 und der Achse des Rohrsystems 104. Zusätzlich ist zwischen dem Anschlussstutzen 102 und dem Rohrsystem 104 ein axialer Versatz S in Form eines Spaltes ausgebildet, der nachfolgend in Bezug auf Fig. 3b näher erläutert wird.

Dort ist der Spalt S für den Fall dargestellt, dass die Achse A des Anschlussstutzens 102 und die Achse des Rohrsystems 104 identisch sind, das in dem Rohrsystem 104 fehlende Stück jedoch größer ist als das Anschlussgehäuse 100 mit den dazu gehörenden Anschlussstutzen 102 und 103. In einer anderen Einbausituation kann anstelle des Spaltes S auch eine Überschneidung stattfinden, wenn das Anschlussgehäuse 100 länger ist als der aus dem Rohrsystem 104 herausgeschnittene Bereich. Sowohl der Spalt als auch eine Überschneidung stellen einen axialen Versatz S dar.

Schließlich kann, wie in Fig. 3c dargestellt, zwischen der Achse A des Anschlussstutzens 102 und der Achse des Rohrsystems 104 auch ein Winkelversatz α auftreten. Natürlich können wie in den Fig. 3a bis 3c dargestellten Versatzarten auch in Kombination auftreten.

Um einen derartigen Versatz ausgleichen zu können, ist bei dem in Fig. 1 dargestellten Anschlussgehäuse 1 zwischen dem Anschlussstutzen 2 und dem Anschlussgehäuse 1 ein bezogen auf die Achse A des Anschlussstutzens 2 in radialer und/oder axialer Richtung elastisches Zwischenstück 7 angeordnet. Dieses ist mit dem ersten Anschlussstutzen 2 und einem von der Zulauföffnung 5 des Anschlussgehäuses 1 ausgehenden Anschlussrohr 8 mediumsdicht und fest verbunden, so dass das Anschlussgehäuse 1 zusammen mit dem Anschlussstutzen 2 und 3 einteilig ausgebildet ist, wobei über das Zwischenstück 7 eine mechanische Entkopplung zwischen dem ersten Anschlussstutzen 2 und dem Anschlussrohr 8 bzw. dem Anschlussgehäuse 1 stattfindet.

Diese mechanische Entkopplung durch das elastische Zwischenstück 7 führt, wie in der Schnittzeichnung gemäß Fig. 2 durch Doppelpfeile angedeutet, dazu, dass der erste Anschlussstutzen 2 relativ zu dem Anschlussrohr 8 des Anschlussgehäuses 1 bewegt werden kann. Dabei können die in den Fig. 3a bis 3b dargestellten Versatzmöglichkeiten eines radialen Versatzes R, eines axialen Versatzes S und eines Winkelversatzes α innerhalb vorgegebener Toleranzen ausgeglichen werden. Dies führt zu einer sehr einfachen Montage des Anschlussgehäuses 1, weil lediglich die beiden Anschlussstutzen 2, 3 an dem in Fig. 2 nicht dargestellten Rohrsystems abdichtend angebracht werden müssen und ein möglicher Versatz dabei durch eine elastische Verformung des Zwischenstücks 7 automatisch ausgeglichen wird.

Dazu ist das Zwischenstück 7 aus einem mediumsbeständigen Gummi ausgebildet. Hierfür bietet sich besonders ein Ethylen-Propylen-Dien-Kautschuk (EPDM), der zur abdichtenden Befestigung des Zwischenstücks 7 an dem ersten Anschlussstutzen 2 und dem Anschlussrohr 8 auf diese aufvulkanisiert werden kann. Die Vulkanisation ist ein Verfahren, bei dem Kautschuk unter Einfluss von Zeit, Temperatur und Druck gegen atmosphärische und chemische Einflüsse sowie gegen mechanische Beanspruchung widerstandsfähig gemacht wird. Der bei diesem Verfahren entstehende Gummi hat dauerelastische Eigenschaften und kehrt bei mechanischer Beanspruchung jeweils wieder in seine Ursprungslage zurück, und hat eine höhere Reißfestigkeit und Dehnungsbeständigkeit gegenüber Alterung und Witterungseinflüssen. Außerdem kann auf einfache Weise eine sichere und feste Verbindung mit metallischen Oberflächen und Kunststoffen hergestellt werden.

Dazu weist das Zwischenstück 7 zwei Verbindungsflächen 9 an den einander gegenüberliegenden Enden des Zwischenstücks 7 auf, welche auf der Umfangsfläche des ersten Anschlussstutzens 2 und des Anschlussrohres 8 aufliegen und dort aufvulkanisiert sind. Somit ist das Zwischenstück 7 in abdichtender Weise fest an dem ersten Anschlussstutzen 2 und dem Anschlussgehäuse 1 bzw. dem daran befestigten Anschlussrohr 8 festgelegt, so dass das Anschlussgehäuse 1 mit dem Zwischenstück 7 und dem ersten Anschlussstutzen 2 sowie dem zweiten Anschlussstutzen 3 ein einteiliges Anschlussgehäuse 1 bildet. Ein in der rohrgebundenen Installation fließendes Medium kann durch den ersten Anschlussstutzen 2, das Zwischenstück 7 und das Anschlussrohr 8 in das Innere des Anschlussgehäuses 1 einströmen.

Um eine ausreichende Elastizität zum Ausgleich eines radialen Versatzes R, eines axialen Versatzes S und/oder eines Winkelversatzes α zu haben, sind die beiden Verbindungsflächen 9 durch einen die Verbindungsflächen 9 miteinander verbindenden Wandabschnitt 10 verbunden, der in normaler Richtung an den Verbindungsflächen 9 angreift und halbrohrartig nach außen, d.h. von der Achse A des Anschlussstutzens 2 weg, gewölbt ist. In dieser Konfiguration kann der Anschlussstutzen 2 sowohl in radialer als auch axialer Richtung bewegt werden, um einen radialen Versatz R, einen axialen Versatz S und einen Winkelversatz α ausgleichen zu können, ohne dass auf die Verbindungsflächen 9 eine hohe Kraft einwirkt, die unter Umständen zu einem Ablösen des Zwischenstücks 7 führen könnte.

In den Fig. 4, 5, 6 und 7 sind alternative Ausbildungen für Zwischenstücke dargestellt. Fig. 4 zeigt ein Zwischenstück 11, bei dem die Verbindungsflächen 9 wie auch bei dem zuvor beschriebenen Zwischenstück 7 radial ausgerichtet sind. Im Gegensatz zu dem Zwischenstück 7 ist der Wandabschnitt 10 jedoch ausgehend von den Verbindungsflächen 9 nach innen, d.h. zu der Achse A des Anschlussstutzens hin, gewölbt.

In Fig. 5 ist ein Zwischenstück 12 mit ebenso zwei radialen Verbindungsflächen 9 dargestellt, welche von der Achse A des Zwischenstücks 12 jedoch in verschiedenem Abstand angeordnet sind und so den Übergang zwischen zwei verschiedenen Rohrdurchmessern ermöglichen. In dieser Ausführungsform ist der die beiden Verbindungsflächen 9 verbindende Wandabschnitt 10 gerade ausbildet.

Bei dem in Fig. 6 dargestellten Zwischenstück 13 verbindet der gekrümmt ausgebildete Wandabschnitt 10 eine radial angeordnete Verbindungsfläche 9 (in der Darstellung rechts) mit einer axial angeordneten Verbindungsfläche 9 (in der Darstellung links).

Bei dem in Fig. 7 dargestellten Zwischenstück 14 werden zwei axial angeordnete Verbindungsflächen 9 durch den Wandabschnitt 10 verbunden. Die Auswahl eines geeigneten Zwischenstücks 7, 11, 12, 13 oder 14 kann je nach Einbausituation erfolgen, wobei die Erfindung nicht auf die beispielhaft dargestellten Zwischenstücke 7, 11, 12, 13 oder 14 beschränkt ist.

Die Gewindestutzen 2, 3 und/oder das Anschlussgehäuse 1 können aus Kunststoff oder Metall ausgebildet sein. Auch eine Kombination dieser Werkstoffe ist erfindungsgemäß problemlos möglich, da die durch die unterschiedlichen Wärmeausdehnungskoeffizienten der verschiedenen Materialien hervorgerufenen Spannungen durch das elastische Zwischenstück 7, 11, 12, 13, 14 ohne weiteres aufgefangen werden. Bspw. können die Gewindestutzen 2, 3 aus Messing und das Anschlussgehäuse 1 aus Kunststoff ausgebildet sein. Ferner ist es möglich, ein Zwischenstück 7, 11, 12, 13 oder 14 auch in dem zweiten Anschlussstutzen 3 vorzusehen, sofern dies die Einbausituation erfordert.

Mit dem erfindungsgemäßen Anschlussgehäuse 1 oder einem mit diesem Anschlussgehäuse 1 ausgestatteten Verbrauchsmessgerät, bspw. einem Wasserzähler, ist ein spannungsfreier Einbau des Anschlussgehäuses 1 einfach möglich, da durch mechanische oder thermische Spannungen auftretende Kräfte von dem elastischen Zwischenstück 7, 11, 12, 13, 14 aufgefangen werden. So können alle möglichen, auftretenden Versatzarten zuverlässig ausgeglichen werden. Da kein Ausrichten der Rohrleitungen der Installation mehr nötig ist, lässt sich das Anschlussgehäuse 1 mit dem Zwischenstück 7, 11, 12, 13, 14 in mindestens einem Anschlussstutzen 2 einfach und sicher montieren. Im Gegensatz zum Stand der Technik erfolgt auch keine Relativbewegung zweier Bauteile in ihrer Dichtfläche, so dass die Dichtwirkung des erfindungsgemäß vorgeschlagenen Anschlussgehäuses 1 verbessert und schmutzunempfindlich ist. Ferner können zwischen der rohrgebundenen Installation und dem Zähler beliebige Werkstoffkombinationen (Metall und/oder Kunststoff) einfach realisiert werden, was auch den Einsatz kostengünstiger Kunststoffe ermöglicht.

### Bezugszeichenliste:

- 1: Anschlussgehäuse
- 2: erster Anschlussstutzen, Gewindestutzen
- 3: zweiter Anschlussstutzen, Gewindestutzen
- 4: Außengewinde
- 5: Öffnung, Zulauf
- 6: Öffnung, Ablauf
- 7: Zwischenstück
- 8: Anschlussrohr
- 9: Verbindungsflächen
- 10: Wandabschnitt
- 11: Zwischenstück
- 12: Zwischenstück
- 13: Zwischenstück
- 14: Zwischenstück
- 15: Befestigungsmöglichkeit, Öffnung mit Gewinde

- 100: Anschlussgehäuse
- 101: Wasserzähler
- 102: Anschlussstutzen
- 103: Anschlussstutzen
- 104: Rohrsystem

- A: Achse der Anschlussstutzen
- R: radialer Versatz
- S: axialer Versatz (Spalt oder Überschneidung)
- α: Winkelversatz

## Patentansprüche

1. Vorrichtung mit einem Anschlussgehäuse (1) für ein Verbrauchsmessgerät und mit einem Anschlussstutzen (2) zum Einbau in eine rohrgebundene Installation und mit einer Öffnung (5, 6) für den Zu- und/oder Ablauf eines in der rohrgebundenen Installation fließenden Mediums, wobei zwischen dem Anschlussstutzen (2) und dem Anschlussgehäuse (1) ein in radialer und/oder axialer Richtung elastisches Zwischenstück (7, 11, 12, 13, 14) angeordnet und das Zwischenstück (7, 11, 12, 13, 14) aus einem mediumsbeständigen Gummi aufgebaut und auf dem Anschlussstutzen (2) und dem Anschlussgehäuse (1) abdichtend aufvulkanisiert ist.

2. Vorrichtung nach einem der vorhergehenden Ansprüche, wobei das Zwischenstück (7, 11, 12, 13, 14) Verbindungsflächen (9) zur Anlage an dem Anschlussstutzen (2) und/oder dem Anschlussgehäuse (1). aufweist.

3. Vorrichtung nach Anspruch 2, wobei der die Verbindungsflächen (9) miteinander verbindende Wandabschnitt (10) des Zwischenstücks (7, 11, 12, 13, 14) winklig an den Verbindungsflächen angreift.

4. Vorrichtung nach Anspruch 2 oder 3, wobei der die Verbindungsflächen (9) miteinander verbindende Wandabschnitt (10) des Zwischenstücks (7, 11, 13) gewölbt ausgebildet ist.

5. Vorrichtung nach einem der vorhergehenden Ansprüche, wobei zwei Anschlussstutzen (2, 3) an dem Anschlussgehäuse (1) angebracht sind, wobei an beiden Anschlussstutzen (2, 3) ein Zwischenstück (7, 11, 12, 13, 14) angeordnet ist.

6. Vorrichtung nach einem der vorhergehenden Ansprüche, wobei das Anschlussgehäuse (1) eine Befestigungsmöglichkeit (14) für ein Verbrauchsmessgerät aufweist.

7. Verbrauchsmessgerät mit einer Messanordnung und einer Vorrichtung mit einem Anschlussgehäuse (1) und einem Anschlussstutzen (2, 3), wobei die Vorrichtung nach einem der Ansprüche 1 bis 6 ausgebildet ist.

8. Verbrauchsmessgerät nach Anspruch 7, wobei das Verbrauchsmessgerät ein Wasserzähler oder Wärmezähler ist.

## Claims

1. A device with a connector housing (1) for a consumption meter, and with a connecting piece (2) for mounting into a tube-bound installation, and with an opening (5, 6) for feeding and/or discharging a medium flowing in the tube-bound installation, wherein an elastic intermediate piece (7, 11, 12, 13, 14) is arranged in the radial and/or axial direction between the connecting piece (2) and the connector housing (1), and the intermediate piece (7, 11, 12, 13, 14) is constructed from a medium-resistant rubber and is sealingly vulcanized onto the connecting piece (2) and the connector housing (1).

2. The device according to any one of the preceding claims, wherein the intermediate piece (7, 11, 12, 13, 14) has connecting surfaces (9) for resting against the connecting piece (2) and/or the connector housing (1).

3. The device according to claim 2, wherein the wall section (10) of the intermediate piece (7, 11, 12, 13, 14), which wall section connects the connecting surfaces (9) to each other, engages at an angle on the connecting surfaces.

4. The device according to claim 2 or claim 3, wherein the wall section (10) of the intermediate piece (7, 11, 13), which wall section connects the connecting surfaces (9) to each other, is formed in a curved manner.

5. The device according to any one of the preceding claims, wherein two connecting pieces (2, 3) are attached to the connector housing (1), wherein an intermediate piece (7, 11, 12, 13, 14) is arranged on both connecting pieces (2, 3).

6. The device according to any one of the preceding claims, wherein the connector housing (1) has a fastening possibility (14) for a consumption meter.

7. A consumption meter with a measuring arrangement and with a device with a connector housing (1) and a connecting piece (2, 3), wherein the device is designed according to any one of the claims 1 to 6.

8. The consumption meter according to claim 7, wherein the consumption meter is a water meter or a heat meter.

## Revendications

1. Dispositif avec un boîtier de raccordement (1) pour un appareil de mesure de consommation et avec un conduit de raccordement (2) pour le montage dans une installation reliée par tuyaux et avec un orifice (5, 6) pour l'arrivée et/ou l'écoulement d'un milieu s'écoulant dans l'installation reliée par tuyaux , une pièce intermédiaire (7, 11, 12, 13, 14) élastique étant disposée dans le sens radial et/ou axial entre le conduit de raccordement (2) et le boîtier de raccordement (1) et la pièce intermédiaire (7, 11, 12, 13, 14) étant constituée d'un caoutchouc résistant au milieu et étant fixée de façon étanche par vulcanisation sur le conduit de raccordement (2) et le boîtier de raccordement (1).

2. Dispositif selon une quelconque des revendications précédentes, la pièce intermédiaire (7, 11, 12, 13, 14 présentant des surface d'assemblage (9) pour installation sur le conduit de raccordement (2) et/ou le boîtier de raccordement (1).

3. Dispositif selon la revendication 2, la section de paroi (10) de la pièce intermédiaire (7, 11, 12, 13, 14) reliant entre elles les surfaces d'assemblage (9) venant en prise de façon angulaire sur les surfaces d'assemblage.

4. Dispositif selon la revendication 2 ou 3, la section de paroi (10) de la pièce intermédiaire (7, 11, 13) reliant entre elles les surfaces d'assemblage (9) étant constituée de forme bombée.

5. Dispositif selon une quelconque des revendications précédentes, deux conduits de raccordement (2, 3) étant montés sur le boîtier de raccordement (1), une pièce intermédiaire (7, 11, 12, 13, 14) étant montée sur les deux conduits de raccordement (2, 3).

6. Dispositif selon une quelconque des revendications précédentes, le boîtier de raccordement (1) présentant une possibilité de fixation (14) pour un appareil de mesure de consommation.

7. Appareil de mesure de consommation avec un dispositif de mesure et un dispositif avec un boîtier de raccordement (1) et un conduit de raccordement (2, 3), le dispositif étant constitué selon une quelconque des revendications 1 à 6.

8. Appareil de mesure de consommation selon la revendication 7, l'appareil de mesure de consommation étant un compteur d'eau ou un compteur thermique.
